# FASCICULE DE BREVET EUROPEEN

(11) **EP 4 248 067 B1**
(45) Date de publication et mention de la délivrance du brevet: **01.01.2025**
(21) Numéro de dépôt: 21819934.7
(22) Date de dépôt: 17.11.2021
(51) Int. Cl.: F01D 5/28, F01D 21/00, G01M 5/00, F01D 21/04

(54) **PIÈCE COMPOSITE, NOTAMMENT POUR UNE TURBOMACHINE D'AÉRONEF**
VERBUNDTEIL, INSBESONDERE FÜR EIN FLUGZEUGTURBINENTRIEBWERK
COMPOSITE PART, IN PARTICULAR FOR AN AIRCRAFT TURBINE ENGINE

(30) Priorité: 17.11.2020 FR 2011756
(43) Date de publication de la demande: 27.09.2023
(73) Titulaire: SAFRAN AIRCRAFT ENGINES, 75015 Paris (FR)
(72) Inventeur: LHOMMEAU, Tony Alain Roger Joël, 77550 MOISSY-CRAMAYEL (FR); LAMOUCHE, Damien Bruno, 77550 MOISSY-CRAMAYEL (FR); MINERVINO, Mattéo, 77550 MOISSY-CRAMAYEL (FR); LAVIGNE, Julie Valérie Clara, 77550 MOISSY-CRAMAYEL (FR)
(74) Mandataire: Gevers & Orès
(86) Numéro de dépôt international: PCT/FR2021/052026
(87) Numéro de publication internationale: WO 2022/106780

(56) Documents cités:
- EP-A1- 3 557 214
- EP-A1- 3 653 840
- WO-A1-2019/234601
- WO-A2-2010/092426
- FR-A1- 2 865 539
- US-A1- 2005 198 967

## Description

### Domaine technique de l'invention

La présente invention concerne une pièce composite, notamment pour une turbomachine d'aéronef, ainsi qu'un procédé de fabrication d'une telle pièce composite.

### Arrière-plan technique

L'arrière-plan technique comprend notamment les documents WO-A1-2019/234 601, EP-A1-3 653 840, FR-A1-2 865 539, US-A1-2005/0198967, EP-A1-3 557 214 et WO-A2-2010/092 426.

De manière connue, une turbomachine s'étendant selon un axe de turbomachine permet de déplacer l'aéronef à partir d'un flux d'air entrant dans la turbomachine et circulant d'amont en aval. Par la suite, les termes « amont» et « aval » sont définis par rapport à l'axe de turbomachine orienté d'amont en aval. De même, les termes « intérieur » et « extérieur » sont définis selon une direction radiale définie par rapport à l'axe de la turbomachine.

Par ailleurs, la turbomachine comprend au moins un compresseur, une chambre de combustion et au moins une turbine pour entraîner en rotation le compresseur. La turbomachine comporte, en amont, une soufflante permettant d'accélérer le flux d'air de l'amont vers l'aval dans la turbomachine et comprenant des aubes s'étendant généralement dans un même plan transversal à l'axe de turbomachine.

Les aubes, notamment en matériau composite, sont notamment des pièces pour lesquelles il est important de pouvoir détecter la formation d'une fissure. Ceci est réalisé par des méthodes conventionnelles non destructives, telles que l'observation visuelle, par mesure acoustique, thermique ou par tomographie à rayon X. Toutefois, l'observation visuelle est limitée aux défauts détectables à l'œil à la surface de la pièce.

Ces méthodes conventionnelles ont l'inconvénient d'être longues à mettre en oeuvre, pouvant notamment nécessiter plusieurs heures d'intervention pour une seule pièce. En outre, ces méthodes peuvent nécessiter de recourir à des appareils spécifiques et/ou sont difficiles à mettre en oeuvre lorsque la pièce est montée sur le moteur.

Également, la mise en place de telles méthodes est réalisée de façon périodique, définie au moment de la conception de la pièce, ou après un événement, en particulier lorsque l'on soupçonne la pièce d'avoir été impactée, notamment lors d'une inspection d'une aube suite à l'ingestion d'un FOD, acronyme anglais pour « *Foreign Object Debris* », désignant tout type de substance, de débris ou d'élément, mécanique ou non, totalement étranger à un aéronef mais pouvant lui causer des dommages. Cette inspection spécifique demande alors de démonter la pièce et de l'envoyer dans un centre agrée pour la réalisation de cette inspection.

Par ailleurs, les méthodes actuellement utilisées dépendent du type de fabrication de la pièce à contrôler. La présente demande concerne une pièce comportant un corps obtenu par tissage en trois dimensions de fibres et noyé dans une résine. Le tissage en trois dimensions (3D) est une technique particulière qui est réalisée par exemple au moyen d'un métier à tisser du type Jacquard et qui permet de réaliser un corps ou une préforme en trois dimensions ayant une forme et des dimensions proches de celles de la pièce finale à réaliser. Le corps comprend alors des fils de trame entremêlés avec des fils de chaîne (les fils de trame et de chaine étant formés par les fibres), ce qui est bien connu de l'homme du métier spécialisé dans cette technique. Cette technique est différente d'une technique de drapage dans laquelle des tissus ou des voiles de fibres sont superposés pour former le corps de la pièce. Cette technique est également différente d'une technique de bobinage dans laquelle des fibres sont enroulées en treillis autour de noeuds.

La présente invention propose une solution à au moins une partie des problèmes évoqués ci-dessus.

### Résumé de l'invention

L'invention concerne une pièce en matériau composite, notamment pour une turbomachine d'aéronef, comportant :
- un corps réalisé à base de fibres tissées en trois dimensions et noyées dans une résine, en particulier une résine organique ou polymérique,
- au moins un capteur de fissuration apte à détecter une fissure de la pièce, et
- au moins un élément de liaison relié au capteur de fissuration et configuré pour transmettre un signal, en particulier à un organe extérieur à la pièce, lorsqu'une fissure de la pièce est détecté(e).

Selon l'invention, le capteur de fissuration comprend au moins un fil conducteur tissé avec les fibres du corps et s'étendant dans une zone du corps dans laquelle la présence de la fissure doit être surveillée, et l'élément de liaison est relié à des extrémités du fil conducteur et est configuré pour mesurer la résistance du fil conducteur et transmettre sans fil le signal, lorsque la résistance du fil conducteur mesurée est supérieure à un seuil prédéterminé.

Le fil conducteur de l'invention s'étendant dans la zone de la pièce dans laquelle on cherche à savoir s'il y a une fissure. Il permet de détecter la présence d'une fissure sur un endroit quelconque de la pièce et l'élément de liaison permet de transmettre cette information.

L'invention propose ainsi de pouvoir statuer sur l'opérabilité de la pièce par un moyen in-situ comprenant notamment le capteur de fissuration et l'élément de liaison. Par ailleurs, ce moyen est non destructif et ne nécessite pas de démonter la pièce. En outre, ce moyen a un impact très réduit sur la masse de la pièce.

D'autre part, l'élément de liaison est un moyen sans fil permettant ainsi de faciliter la détection d'une formation de fissure, notamment sur des pièces mobiles, telles que des aubes. Grâce notamment à la technologie RFID, on peut se passer des raccordements de fils et bénéficier d'une solution ayant un impact sur la masse très faible.

Le fil conducteur est tissé avec les fibres de la préforme et est donc intégré dans la préforme.

La pièce selon l'invention peut comprendre une ou plusieurs des caractéristiques suivantes, prises isolément ou en combinaison les unes avec les autres :
- les fibres sont en carbone et le fil conducteur est entouré par une gaine isolante, de préférence réalisée dans le même matériau que la résine ;
- le fil conducteur a un diamètre compris entre 0,05mm et 8mm ;
- le fil conducteur forme au moins une boucle en C et/ou en U ;
- le fil conducteur est réalisé dans un matériau choisi parmi le cuivre, l'aluminium, le fer, l'argent, le nickel et leurs alliages, notamment le constantan ;
- le seuil est compris entre 1,01 x R et 1,10 x R, notamment compris entre 1,02 x R et 1,08 x R, en particulier est égal à 1,05 x R, où R étant la résistance initiale du fil conducteur ;
- l'élément de liaison comprend une étiquette RFID, notamment configurée pour fonctionner à une fréquence comprise entre 860 et 960 MHz ;
- la pièce forme une aube, en particulier une aube de soufflante.

L'invention concerne également une turbomachine d'aéronef, comportant une pièce telle que décrite précédemment. Spécifiquement, la pièce étant une aube de soufflante, la turbomachine comprend un carter de soufflante entourant l'aube de soufflante et portant un dispositif de lecture, tel qu'un lecteur RFID.

L'invention concerne également un procédé de fabrication d'une pièce, telle que décrite précédemment, dans lequel il comprend :
a) une étape d'insertion consistant à insérer le fil conducteur dans une préforme de fibres tissées, le fil conducteur s'étendant le long de la zone à dans laquelle la présence d'une fissure doit être surveillée,
b) une étape de jonction consistant à apposer l'élément de liaison sur la préforme ou intégrer l'élément de liaison dans la préforme et à relier des extrémités du fil conducteur à l'élément de liaison de façon à ce qu'il puisse mesurer la résistance du fil conducteur, et
c) une étape d'injection consistant à injecter la résine, notamment de la résine organique ou polymérique, dans la préforme préalablement disposée dans un moule, de façon à réaliser le corps de la pièce et à solidifier l'ensemble.

Selon une variante de réalisation du procédé, l'étape d'injection c) est précédée d'une étape d'isolation électrique de l'élément de liaison et de la liaison au fil conducteur.

### Brève description des figures

L'invention sera mieux comprise et d'autres caractéristiques et avantages apparaîtront encore à la lecture de la description détaillée qui suit comprenant des modes de réalisation, donnés à titre illustratif en référence avec les figures annexées et présentés en tant qu'exemples non limitatifs, qui pourront servir à compléter la compréhension de la présente invention et l'exposé de sa réalisation et, le cas échéant, contribuer à sa définition, sur lesquelles :
[Fig.1] la figure 1 est une représentation schématique en coupe longitudinale d'une turbomachine ;
[Fig.2] la figure 2 est une représentation schématique en coupe pièce comportant un capteur de fissuration et un élément de liaison selon l'invention ;
[Fig.3] la figure 3 est une représentation schématique d'une étape de lecture de l'élément de liaison selon l'invention;
[Fig.4] la figure 4 est une représentation schématique en perspective d'une soufflante de turbomachine avec un élément de liaison et un dispositif de lecture selon l'invention ;
[Fig.5] la figure 5 est une représentation schématique de côté d'une aube de soufflante avec un élément de liaison selon l'invention ;
[Fig.6] la figure 6 est une représentation schématique vue de dessus d'un élément de liaison selon l'invention ;
[Fig.7] la figure 7 est une représentation schématique en perspective d'un morceau de préforme tissée dans lequel est positionné un élément de liaison selon l'invention ;
[Fig.8a-8c] les figures 8a, 8b, 8c sont des représentations schématiques du principe de détection de la formation d'une fissure sur une pièce selon l'invention;
[Fig.9a-9b] les figures 9a, 9b sont des représentations schématiques du procédé de fabrication d'une pièce selon l'invention ; et
[Fig.10] la figure 10 est une représentation schématique en perspective d'un morceau de préforme tissée dans lequel est intégré un fil conducteur.

### Description détaillée de l'invention

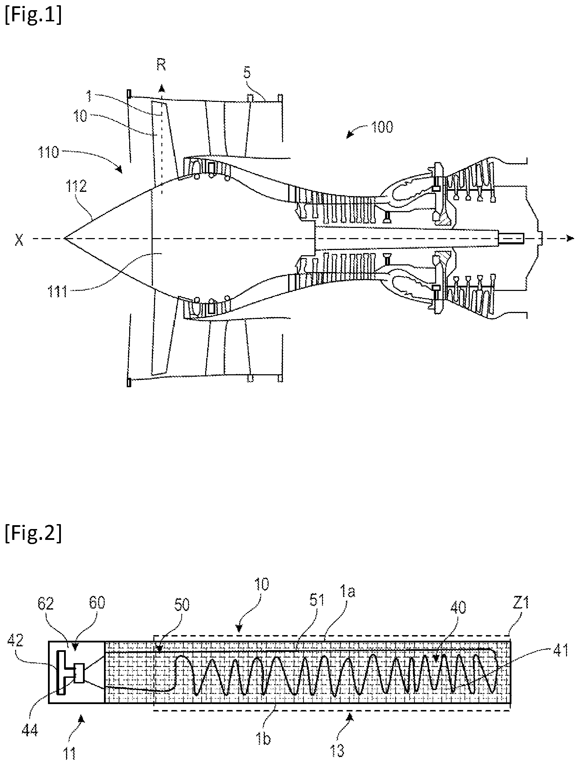

Comme représentée sur la figure 1 qui est une représentation schématique en coupe longitudinale d'une turbomachine 100 d'un aéronef, l'invention est propre à une pièce 10 en matériau composite, notamment pour la turbomachine 100.

La pièce 10 peut, par exemple, être une aube 1, en particulier une aube 1 d'une soufflante 110 de la turbomachine 100. La turbomachine 100 comprend notamment un carter 5 de la soufflante 110 entourant les aubes 1 de la soufflante 110.

La turbomachine 100 s'étend selon un axe de turbomachine X et permet de déplacer l'aéronef à partir d'un flux d'air entrant dans la turbomachine 100 et circulant d'amont en aval.

De manière connue, la turbomachine 100 comprend au moins un compresseur, une chambre annulaire de combustion et au moins une turbine (ces éléments étant non représentés), pour entraîner en rotation le rotor du compresseur.

La turbomachine 100 comporte en amont la soufflante 110 permettant d'accélérer le flux d'air de l'amont vers l'aval dans la turbomachine 100. La soufflante 110 comprend un disque 111, solidaire en rotation d'un arbre du compresseur, comprenant des logements, répartis à la périphérie du disque 111, dans lesquels sont respectivement montées les aubes 1 par insertion axiale selon l'axe de turbomachine X d'amont vers l'aval.

Les aubes 1 s'étendent généralement dans un même plan transversal à l'axe de turbomachine X. Dans l'exemple de réalisation présenté, la turbomachine 100 comporte un cône 112 qui est monté en amont du disque 111.

La pièce 10 est réalisée dans un matériau composite comportant des fibres 41 noyées dans une résine, par exemple une résine organique ou polymérique. Certaines des fibres 41 sont conductrices de l'électricité (également appelées fibres électro conductrices) et d'autres fibres 41 sont non conductrices de l'électricité (également appelées fibres non électro conductrices). La résine n'est pas conductrice de l'électricité. Les fibres électro conductrices sont de préférence des fibres métalliques et/ou des fibres de carbone. Les fibres non électro conductrices sont de préférence des fibres de verre et/ou des fibres thermoplastiques (aramide, polyéthylène, polyester, etc.).

Les fibres 41 sont tissées entre elles de manière à former au moins une préforme, en trois dimensions, destinée à être noyée dans la résine. La résine est, dans cet exemple, thermodurcissable mais elle pourrait être de nature différente. Il peut s'agir d'une résine époxy ou bismaléimide.

Plus spécifiquement, l'aube 1 comprend un pied, une pale 13, un bord d'attaque 1a et un bord de fuite 1b.

On se reporte dorénavant à la figure 2 qui est une représentation schématique en coupe d'une pièce 10 comportant un capteur de fissuration 50 et un élément de liaison 60. L'invention est propre à la pièce 10 en matériau composite, telle que l'aube 1, comportant un corps 40 réalisé à base des fibres 41 tissées et noyées dans la résine. La pièce 10 comporte également au moins le capteur de fissuration 50 destiné à détecter une fissuration de la pièce 10. La pièce 10 comporte en outre au moins un élément de liaison 60 relié au capteur de fissuration 50 et configuré pour mesurer une résistance et transmettre un signal S, notamment à un organe extérieur (non représenté) à la pièce 10, lorsqu'une fissuration de la pièce 10 est détecté.

Le capteur de fissuration 50 comprend au moins un fil conducteur 51 présent dans une zone Z1 du corps 40 dont une apparition d'une fissuration est à surveiller, c'est-à-dire où une fissuration peut se produire et doit par conséquent être détectée.

Avantageusement, le capteur de fissuration 50 est intégré à l'intérieur du corps 40 de façon à ce que le capteur puisse détecter une fissure dans un volume de la pièce à surveiller. Pour cela, le fil conducteur 51 est tissé avec les fibres 41 du corps 40. Le tissage du fil conducteur 51 lui permet d'être orienté dans différentes directions et de parcourir un chemin complexe permettant d'optimiser la zone Z1 surveillée de la pièce. Selon un exemple plus spécifique, les fibres 41 sont notamment en carbone et le fil conducteur 51 est entouré, par exemple, par une gaine isolante (non représentée) permettant d'éviter que la valeur résistive du fil conducteur 51 soit modifiée par contact électrique ou court-circuit avec d'autres éléments conducteurs présents dans la pièce 10, tel que par exemple un renfort de la préforme, notamment des fibres 41 en carbone, ce qui aurait pour effet de le rendre inapte à la fonction de détection du capteur.

Avantageusement, la tension de mesure étant faible, l'épaisseur de la gaine isolante peut être faible mais doit résister à l'usure lors de son passage dans une machine à tisser permettant de fabriquer la pièce 10. Le matériau de l'isolant utilisé pour la gaine isolante peut notamment être un isolant polymère compatible avec le matériau de la préforme, de préférence réalisée dans un isolant polymère compatible de la résine, idéalement de la même famille que la résine, par exemple une gaine isolante en époxy lorsque la résine présente une base époxy.

Le fil conducteur 51 peut présenter, en particulier, un diamètre compris entre 0,05mm et 8mm. Un tel diamètre permet d'être assez grand pour résister à la tension du fil conducteur 51 et d'être assez petit pour être compatible des métiers à tisser permettant de fabriquer la pièce 10. Particulièrement, le fil conducteur 51 peut former, par exemple, une ou plusieurs boucles en C et/ou en U, permettant de couvrir au mieux en volume une zone à surveiller telle que la zone Z1.

Le fil conducteur 51 est réalisé dans un matériau conducteur électrique dont la résistance électrique est connue. Le matériau est choisi, notamment, parmi le cuivre, l'aluminium, le fer, l'argent, le nickel, et leurs alliages, et est par exemple réalisé en constantan. Le constantan est un alliage.

Le fil conducteur 51 est, par exemple, réalisé en constantan, qui est un alliage ayant une résistance électrique fortement indépendante de la température, permettant d'obtenir une valeur plus précise qu'avec les autres types de matériau. De plus, il n'est ainsi pas nécessaire de compenser l'erreur par une augmentation potentielle de la température.

L'élément de liaison 60 est configuré pour mesurer la résistance du fil conducteur 51. Selon un mode de relation, l'élément de liaison 60 comprend une étiquette RFID 62 pour la transmission sans fil d'un signal S, notamment la transmission de l'information de l'évolution de la résistance du fil conducteur 51, en particulier lorsque la résistance du fil conducteur 51est supérieure à un seuil prédéterminé.

L'élément de liaison 60, tel que l'étiquette RFID 62, comprend notamment pour cela une antenne 42 et un ou plusieurs composants électroniques 44 tels qu'une puce. L'acronyme anglais « RFID », ou *« Radio Frequency Identification* », désigne un support du type radio-identification.

Les composants électroniques 44 de l'élément de liaison sont configurés par exemple pour injecter un courant dans le fil conducteur 51 et pour mesurer la tension aux bornes du fil conducteur. Ils peuvent en outre être configurés pour comparer la valeur mesurée de tension à une valeur de référence, telle qu'une valeur seuil, et pour émettre un signal lorsque la valeur mesurée est supérieure à la valeur de référence.

L'élément de liaison 60, tel que l'étiquette RFID 62, peut être intégré dans la pièce 10, par exemple dans la préforme ou encore apposé sur la préforme avant injection de la résine.

Si la pièce 10 se fissure, le fil conducteur 51 étant « prisonnier » de la résine, la fissure entraine une rupture du fil conducteur 51. Le fil conducteur 51 se fissurera donc lui aussi suivant la fissure de la pièce 10. Ceci impactera directement la valeur de la résistance du fil conducteur 51.

L'élément de liaison 60, en particulier l'étiquette RFID, présentant une fonction de mesure de la résistance électrique du fil conducteur 51, il est ainsi possible de savoir, si la valeur de la résistance électrique du fil conducteur 51 est supérieure au seuil prédéterminé, que la pièce 10 est fissurée ou présente un délaminage.

Le seuil prédéterminé est notamment compris entre 1,01 x R et 1,10 x R, notamment compris entre 1,02 x R et 1,08 x R, en particulier égal à 1,05 x R, où R étant une résistance initiale du fil conducteur 51. Si la résistance du fil conducteur 51 est identique avec une variation compris entre 1% et 10%, notamment compris entre 2% et 8%, en particulier de 5% de la valeur initiale, alors il peut être considéré qu'il n'y a pas présence de rupture du fil conducteur 51 donc pas de présence d'une fissure de la pièce 10 dans la zone Z1.

Inversement, si la valeur de la résistance électrique du fil conducteur 51 est en dehors des plages prédéterminées, en particulier définies au-dessus, alors il peut être considéré qu'il y a eu une évolution de l'intégrité du fil conducteur 51 et donc présence d'une fissure de la pièce 10.

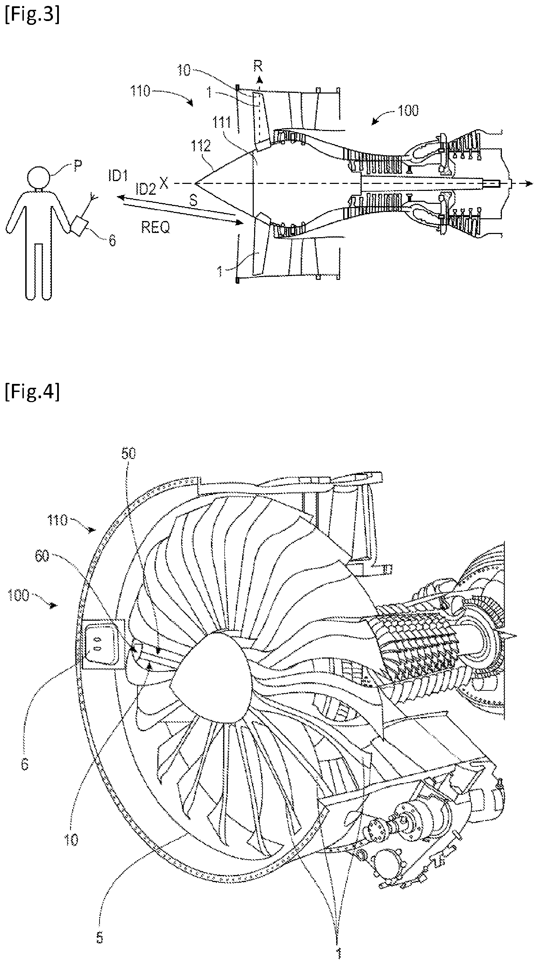

La figure 3 est une représentation schématique d'une étape de lecture de l'élément de liaison 60 selon l'invention. Dans l'exemple particulier illustré sur la figure 3, il peut être avantageux que l'élément de liaison 60 puisse, dans un premier cas, être de préférence positionné au plus proche du centre de rotation du système sur laquelle la pièce 10, en l'occurrence l'aube 10, est montée, c'est-à-dire ici du centre de rotation de la turbomachine 100. En effet, si la pièce 10, en l'occurrence l'aube 10, est en rotation, cela permet en particulier à un opérateur P utilisant manuellement un dispositif de lecture 6, notamment un lecteur 6, en particulier un lecteur RFID 6, positionné à proximité du centre de rotation (ce qu'il peut faire facilement), de pouvoir récupérer successivement ou en une seule fois les données des différents éléments de liaison 60, notamment les différentes étiquettes RFID 62, présentes sur les pièces 10, en l'occurrence les aubes 1, de manière collective.

La figure 4 est une représentation schématique en perspective de la soufflante 110 de la turbomachine 100 équipée de l'élément de liaison 60, notamment l'étiquette RFID 62, et du dispositif de lecture 60, notamment le lecteur RFID 60, correspondant à une mise en oeuvre de l'invention permettant une récupération des données des différents éléments de liaison 60, notamment les différentes étiquettes RFID 62, présentes sur les pièces 10, en l'occurrence les aubes 1, de manière collective selon un processus automatique. Dans cette variante de réalisation illustrée à la figure 4, l'élément de liaison 60 est placé dans une zone éloignée du cône 112 de soufflante 110.

L'élément de liaison 60 est ici positionné sur une extrémité extérieure de la pièce 10, en l'occurrence à l'extrémité distale de l'aube 1, permettant ainsi d'être lue facilement par un dispositif de lecture 6 placé à proximité, sur une partie non mobile, par exemple fixé sur le carter 5 de la soufflante 110.

Le dispositif de lecture 6 étant fixé sur une partie non mobile, lorsque la pièce 10 passe devant le dispositif de lecture 6, il peut récupérer les données envoyées par éléments de liaison 60, telles que les étiquettes RFID 62, des différentes pièces 10, en l'occurrence des aubes 1 de la soufflante 110.

La transmission de données, notamment RFID est sensible aux perturbations électromagnétiques. Or, la zone du cône de soufflante 110 comporte de nombreuses pièces métalliques réalisant un blindage électromagnétique et formant une cage de Faraday. L'éloignement de l'élément de liaison 60 par rapport au cône de soufflante 110 permet d'éviter que des perturbations électromagnétiques affectent la transmission des données des étiquettes RFID et du signal S.

Par ailleurs, dans le but de maximiser la distance de détection de l'élément de liaison 60, notamment l'étiquette RFID 62, par le dispositif de lecture 6 approprié, il convient d'éviter la proximité avec un élément conducteur..

La résine utilisée pour la fabrication des aubes 1 de soufflante 110 est, de par sa nature, isolante alors que le carbone utilisé pour les fibres 41 de tissage de la préforme est un bon conducteur électrique. Ainsi, selon un aspect de l'invention, on positionne l'élément de liaison 60 dans une zone de la pièce 10, en l'occurrence l'aube 1, présentant le moins possible de carbone.

De manière plus détaillée, le positionnement des éléments de liaison 60 dans un endroit riche en fibres 41 non électro conductrices, ou « non métalliques », permet de réduire une perturbation du champs électromagnétique et /ou de l'antenne 42 de l'élément de liaison 60 et/ou une dissipation induite par les fibres 41 électro conductrices, comme les fibres 41 en carbone, et d'augmenter la distance de détection de quelques centimètres notamment de 5cm à 25cm, en particulier entre 10cm à 20cm, jusqu'à quelques mètres, notamment de 0,5m à 10m, en particulier entre 2m à 8m.

En plus, pour que l'élément de liaison 60 ne soit pas d'un effet nocif pour le comportement mécanique du corps 40, le choix du modèle et la position de l'élément de liaison 60 dans la pièce 10 sont, de préférence, soigneusement définis.

Par ailleurs, l'élément de liaison 60, notamment l'étiquette RFID 62, est intégré dans la pièce 10, notamment noyé dans la résine, et donc est protégé de l'environnement extérieur.

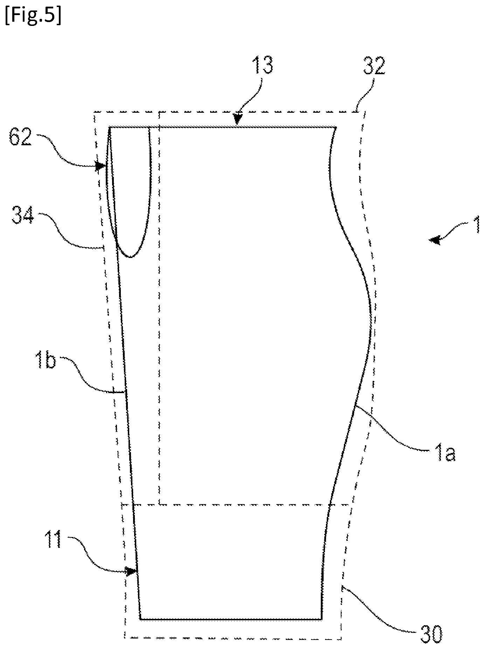

On se reporte dorénavant à la figure 5 qui est une représentation schématique de la pièce 10 selon la présente invention réalisée en tant qu'aube. La figure 5 présente plus particulièrement une vue de côté de l'aube 1 de soufflante 110 avec l'élément de liaison 60.

Selon l'exemple de réalisation illustré à la figure 5, le pied 11 de l'aube 1 est formé à partir d'une préforme tissée ou d'une première partie d'une préforme tissée 30 comprenant uniquement des fibres 41 électroconductrices, notamment des fibres 41 de carbone tissées. C'est également le cas d'une majeure partie de la pale 13 et, en particulier, du bord d'attaque 1a, qui est réalisée à partir d'une préforme ou d'une deuxième partie de préforme 32 comprenant donc uniquement des fibres 41 électroconductrices. La préforme est, en général, unique et s'étend dans la première partie de préforme 30 et la deuxième partie de préforme 32.

Au contraire, la portion de la pale 13 s'étendant le long du bord de fuite 1b, est réalisée par tissage de fibres 41 comprenant des fibres électroconductrices, notamment des fibres de carbone, et des fibres non électroconductrices, notamment des fibres de verre, et comprend donc une préforme ou une troisième partie de préforme 34 en matériau hybride.

La première partie de préforme 30, la deuxième partie de préforme 32 et la troisième partie de préforme 34 sont délimitées par des rectangles en traits pointillés dans la figure 5.

Ainsi, lorsque l'on souhaite maximiser la distance de détection entre le dispositif de lecture et l'élément de liaison 60, notamment l'étiquette RFID 62, pour permettre notamment un procédé de recollection des données en provenance de toutes les étiquettes RFID, qui soit automatique et collectif correspondant au mode de recollection des données illustré à la figure 4, cet élément de liaison 60 sera de préférence situé dans la troisième partie de préforme 34 qui est celle présentant le moins de fibres 41 électroconductrices. L'élément de liaison 60 est ainsi positionné au voisinage du bord de fuite 1b de l'aube 1, dans l'exemple représenté. Ceci est particulièrement avantageux car cela permet de faciliter la détection de l'élément de liaison 60 à distance par un dispositif de lecture 6, correspondant à un procédé de recollection des données illustré à la figure 4.

Dans un mode de réalisation, l'élément de liaison 60, notamment l'étiquette RFID 62, est positionnée sur la pièce 10 dans une zone qui sera suffisamment proche du dispositif de lecture 6, lorsque ce dernier interrogera l'étiquette, pour permettre en effet que cette l'étiquette RFID 62 soit alimentée, via son antenne : l'électronique de l'étiquette RFID peut alors déterminer la résistance du fil conducteur 51 intégré dans la pièce 10 transmettre un signal S avec les données de mesure correspondantes vers le dispositif de lecture.

En effet, l'élément de liaison 60, notamment l'étiquette RFID 62 est, de préférence, un dispositif passif, c'est-à-dire sans batterie, mais alimentée par une onde radio générée par le dispositif de lecture 6, notamment le lecteur RFID 6.

Alternativement, l'élément de liaison 60, notamment l'étiquette RFID 62, pourrait comprendre une batterie. La présence d'une batterie permettrait par exemple d'envisager une lecture périodique de la résistance du fil conducteur. Elle pourrait également permettre de réduire la distance de communication entre le dispositif de lecture et l'étiquette.

Préférentiellement, l'élément de liaison 60, notamment l'étiquette 62, est configuré pour fonctionner sur la bande UHF, acronyme anglo-saxon qui signifie « *Ultra High Frequency »,* par exemple à une fréquence comprise notamment entre 860 et 960 MHz.

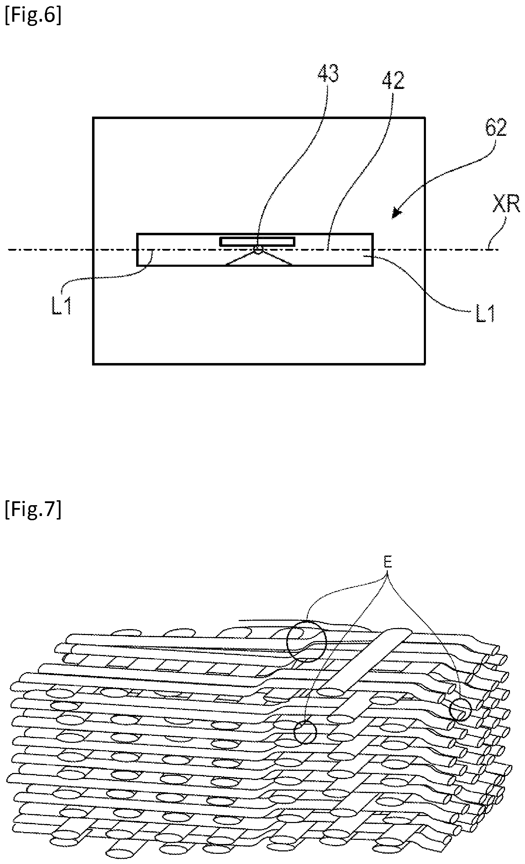

Lorsque la préforme est essentiellement formée de fibres électroconductrices, il est préférable que l'élément de liaison 60 soit isolé de ces fibres. La figure 6 est une représentation schématique vue de dessus de l'élément de liaison 60, tel que l'étiquette RFID 62, dans ce type de préforme.

Selon cet exemple de réalisation, l'élément de liaison 60, tel que l'étiquette RFID 62, comprend une bille 43 de matériau diélectrique, typiquement un polymère, qui a pour objet de protéger la puce électronique de l'étiquette ainsi qu'une connexion électrique à l'antenne 42.

L'élément le plus encombrant de l'élément de liaison 60 est la bille 43 qui a, de préférence, un diamètre inférieur ou égal à 5mm. La bille assure l'isolation avec l'antenne et l'électronique et induit une certaine épaisseur à l'élément de liaison du fait de son encombrement.

Selon une variante de réalisation, l'antenne 42 est plane et peut s'étendre parallèlement à une surface de la pièce 10, telle que la surface de l'aube 1 ou de la pale 13, ou entre deux plis ou nappes de fibres 41 de la pièce 10 ou de la préforme. L'antenne 42 a, par exemple, une épaisseur inférieure ou égale à 2 mm, notamment inférieure ou égale à 1mm, en particulier inférieure ou égale à 0.5mm.

L'élément de liaison 60, tel que l"étiquette RFID 62, tel que précédemment décrite a l'avantage de répondre aux exigences dimensionnelles, de stabilité thermique et de compatibilité chimique dans le domaine. Par ailleurs, les matériaux de l'élément de liaison 60, tel que l'étiquette RFID 62, sont, de préférence, choisis pour :
- ne pas affecter la résine et la polymérisation de celle-ci,
- être stable thermiquement pendant la cuisson éventuelle de la préforme imprégnée de résine et/ou la réaction exothermique de polymérisation de la résine,
- ne pas perturber le tissage et la préforme au moment de la fermeture du moule de fabrication de l'aube, et
- ne pas être trop encombrante.

La bille 43 est, par exemple, en polymère. Par ailleurs, l'antenne 42 est, par exemple, en cuivre ou aluminium et potentiellement recouvert d'un polymère thermoplastique ou époxyde (PET, PC, Poly imide etc.).

L'élément de liaison 60, tel que l'étiquette RFID 62, peut comporter une mémoire de stockage. Ainsi, des données d'identification et/ou de caractérisation ID1, ID2 peuvent être stockées, par exemple un numéro de série ID1 connu sous sa désignation anglaise « *serial number SN* », et/ou un numéro de version ID2, connu sous sa désignation anglaise « *part number PN* ».

Il va de soi que la mémoire de stockage pourrait stocker une unique donnée ou un ensemble de données, telles que, par exemple, une donnée de déformation mesurée de la pièce 10, une résistance du fil conducteur 51, un dépassement d'un seuil de résistance du fil conducteur 51, un identifiant unique permettant d'identifier de façon particulière une pièce ou plus de deux données d'identification tel qu'un identifiant du fabricant (code CAGE ...), une date de fabrication, un degré de sensibilité, notamment à des fluides spécifiques, une référence d'autorisation d'exploitation, des données liées aux opérations de vécu de maintenance ou de logistique de la pièce 10, tels qu'un statut opérationnel, des opérations réalisées, etc.

Comme illustré sur la figure 3, l'antenne 42 de l'élément de liaison 60, tel que l'étiquette RFID 62, est configurée pour recevoir une requête de lecture REQ et émettre en retour des données, notamment les données d'identification et/ou de caractérisation ID1, ID2, et/ou un signal S, en particulier lorsque la résistance du fil conducteur 51 est supérieure à un seuil prédéterminé.

Une étiquette selon la technologie RFID est connue de l'homme du métier. De manière connue, parmi les étiquettes selon la technologie RFID, on distingue celles destinées à une utilisation dans un environnement « métallique » (du type à bille polymère tel que décrit précédemment), dont l'épaisseur est minimum de 1,5mm pour fonctionner à haute fréquence ou UHF, celles destinées à une utilisation dans un environnement « non métallique » ou non conducteur, dont l'épaisseur est inférieure à 0,5mm pour une application UHF et celles destinées à une utilisation « mixte ».

Le type d'étiquette RFID est choisi en fonction du type d'aube et/ou en fonction de la zone où l'étiquette doit être placée.

Une étiquette RFID 62 pour un environnement « non métallique » est avantageuse du fait de sa faible épaisseur, et son application est particulièrement intéressante pour une aube 1 qui a une épaisseur fine imposée par les contraintes aérodynamiques. Ainsi, dans le cas où l'étiquette RFID 62 est pour une utilisation « non métallique », la préforme devra comprendre des fibres 41 de verre.

Un intérêt d'utiliser l'étiquette RFID 62 pour un environnement « métallique » est de relâcher les contraintes d'intégration relativement à l'environnement et notamment dans des zones de préforme tissés ne comportant pas ou peu de fibres 41 non conductrices telle que des fibres de verre.

Selon l'exemple illustré sur la figure 6, l'antenne 42 comporte notamment au moins un lobe de communication L1 orienté selon un axe radio XR pour recevoir la requête de lecture REQ et émettre en retour des données, par exemple les données d'identification et/ou de caractérisation ID1, ID2 et/ou un signal S, par exemple lorsqu'une fissuration de la pièce 10 est détecté.

L'antenne 42 peut notamment comporter deux lobes de communication L1 alignés selon un même axe radio XR. Ainsi, l'élément de liaison 60, tel que l'étiquette RFID 62, peut ainsi être utilisé selon deux sens opposés, selon une même direction.

La figure 7 est une représentation schématique en perspective d'un morceau de préforme tissée dans lequel est positionné l'élément de liaison 60. Plus particulièrement, la figure 7 illustre une partie d'une préforme tissée de la pièce 10, notamment de l'aube 1, et montre des espaces E existant dans cette préforme. Les espaces E sont aptes à loger la bille 43 de l'élément de liaison 60, tel que l'étiquette RFID 62, dans le cas d'un environnement « métallique ». Les espaces E sont situés entre des fibres 41 tissées. Ainsi, la bille 43 logée dans l'un des espaces E est destinée à être noyée dans la résine qui imbibe la préforme et donc à être entièrement noyée dans la résine sans impact sur la forme de la préforme.

L'utilisation de l'élément de liaison 60, tel que l'étiquette RFID 62, et son intégration dans la préforme présentent plusieurs avantages parmi lesquels :
- il n'y a pas d'étape spécifique supplémentaire pour installer l'élément de liaison 60, tel que l'étiquette RFID 62, car son intégration est prévue pendant la fabrication de la pièce 10, notamment l'aube 1, avant l'injection de la résine dans le moule de fabrication de a pièce 10, notamment l'aube 1 ;
- l'élément de liaison 60, tel que l'étiquette RFID 62, est intégré dans a pièce 10, notamment l'aube 1, et est donc infalsifiable. Elle ne peut pas être enlevée sans risque de dégradation de la pièce 10, notamment l'aube 1 ;
- l'élément de liaison 60, tel que l'étiquette RFID 62, est noyé dans la résine. Il n'y a donc pas de risque de décollement et de perte accidentelle de l'élément de liaison 60 en fonctionnement ; et
- une détection de l'élément de liaison 60, tel que l'étiquette RFID 62, sans nécessité de dépose notamment de la turbomachine et/ou de l'aube.

L'antenne 42 de l'élément de liaison 60, tel que l'étiquette RFID 62, a également pour avantage :
- d'être fine et donc facilement positionnable et intégrable ; et
- de faciliter la détection par le dispositif de lecture 6, tel que le lecteur RFID 6.

En référence à la figure 3, il va dorénavant être présenté un procédé de lecture individuel et collectif des données d'identification et/ou de caractérisation ID1, ID2 d'une ou plusieurs pièces 10, notamment des aubes 1 d'une soufflante 110 d'une turbomachine 100, en particulier un turbomoteur d'aéronef, ainsi qu'un signal S transmis, notamment lorsqu'une fissuration est détecté sur ces pièces 10.

Dans cet exemple, l'opérateur P utilise le dispositif de lecture 6 pour assurer une radio-identification, notamment le lecteur RFID 6, et se place à distance de la ou des pièces 10, c'est-à-dire, selon l'exemple présenté à la figure 3, à distance de la turbomachine 100, en particulier en amont de cette dernière de manière à être proche de la soufflante 110.

A l'aide du dispositif de lecture 6, l'opérateur P émet de manière radio la requête de lecture REQ qui est reçue de manière radio par l'antenne 42 de l'élément de liaison 60, tel que l'étiquette RFID 62.

En réponse à la requête de lecture REQ, l'antenne 42 émet un signal radio transmettant des données, par exemple les données d'identification et/ou de caractérisation ID1, ID2 et le signal S, notamment lorsqu'une fissuration de la pièce 10 est détecté. Les données transmises par l'antenne 42 sont lues par le dispositif de lecture 6. En particulier, les données d'identification et/ou de caractérisation ID1, ID2 et le signal S sont émis par les lobes de communication L1 de l'antenne 42. Préférentiellement, les données les données d'identification et/ou de caractérisation ID1, ID2 et/ou les données de déformation mesurée DF lues et le signal S reçus sont stockés de manière informatique dans le dispositif de lecture 6.

En fonction de la puissance d'émission du dispositif de lecture 6 et de la distance entre le dispositif de lecture 6 et l'élément de liaison 60, l'opérateur peut lire de manière individuelle un seul élément de liaison 60, en l'occurrence une seule étiquette RFID 62 d'une aube 1 (puissance faible et distance faible), ou de manière collective une pluralité d'éléments de liaison 60, en l'occurrence une pluralité d'étiquettes RFID 62 des aubes 1 d'une soufflante 110 (puissance élevée et distance importante). En pratique, une lecture peut être réalisée à une distance comprise entre quelques centimètres (5cm à 25cm) jusqu'à plusieurs mètres (0.5m à 10m), selon l'élément de liaison 60, le dispositif de lecture 6 et l'environnement.

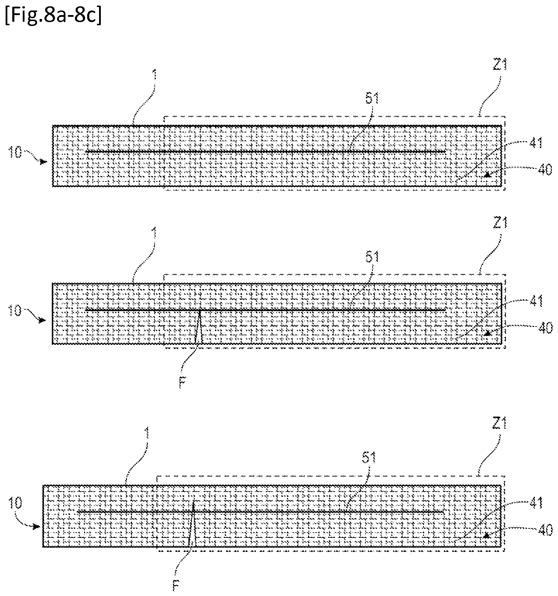

Comme représenté sur les figures 8a, 8b, 8c, l'invention concerne également un procédé de détection d'une formation d'une fissure sur la pièce 10 telle que décrite précédemment.

Plus spécifiquement, le fonctionnement de la détection de fissure et la transmission d'une information correspondante est illustré de manière plus détaillée sur les figures 8a, 8b, 8c.

Sur la figure 8a est représentée la pièce 10, telle que l'aube 1, comprenant un fil conducteur 51. La résistance du fil conducteur 51 est ici égale à la valeur de la résistance électrique connue pour le matériau choisi du fil conducteur 51. Sur la figure 8b, une fissure F apparaît sur la pièce 10. La fissure F n'atteint cependant pas le fil conducteur 51. Il n'y a donc pas d'élongation du fil conducteur 51, ni de rupture de contact électrique. La valeur de la résistance du fil conducteur 51 reste donc identique à la valeur de la résistance initiale du fil conducteur 51.

Sur la figure 8c, la fissure F atteint le fil conducteur 51. Le fil conducteur 51 intégré à la pièce 10 est donc rompu ou fissuré en partie ou complètement. La fissure F affecte ainsi la circulation du courant dans le fil conducteur 51. La valeur de la résistance du fil conducteur 51 augmente alors considérablement, pouvant atteindre notamment une valeur infinie dans le cas où le fil conducteur 51 est complètement rompu. L'injection d'un courant dans le fil conducteur 51 permet de vérifier cet état. Dans le cas des figures 8a et 8b, l'élément de liaison ou l'étiquette injecte ce courant et mesure la tension aux bornes du fil conducteur 51 pour en déduire sa résistance selon la loi d'Ohm. Dans le cas de la figure 8c, l'élément de liaison ou l'étiquette injecte ce courant et mesure une tension nulle aux bornes du fil conducteur 51 du fait de la résistance infinie du fil conducteur.

L'augmentation de valeur de la résistance du fil conducteur 51, au-delà d'un seuil prédéfini, par exemple correspondant à une augmentation comprise entre 1% et 10%, notamment compris entre 2% et 8%, en particulier de 5% de la valeur initiale de la résistance du fil conducteur 51, indique qu'il y a la présence d'une fissure de la pièce 10, en particulier de l'aube 1, au niveau de la zone Z1 dans laquelle la présence d'une fissure doit être surveillée où passe le fil conducteur 51. L'élément de liaison 60, sur interrogation/requête d'un dispositif de lecture externe, envoie alors le signal S, notamment par onde radio, vers le dispositif de lecture.

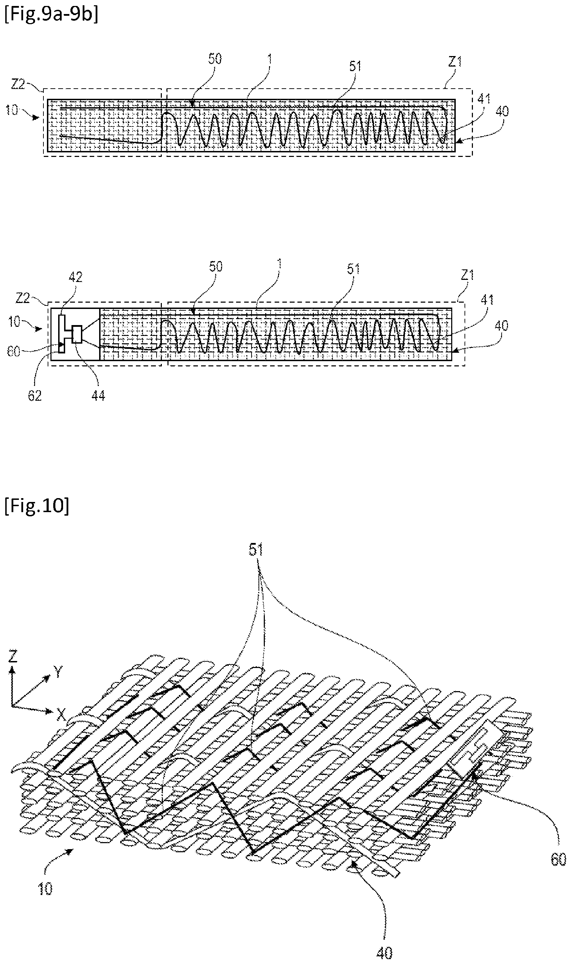

Comme représenté sur les figures 9a, 9b, l'invention concerne également un procédé de fabrication d'une pièce 10, notamment une aube 1, telle que décrite précédemment.

Le procédé comprend une étape d'insertion a), représentée sur la figure 9a, consistant à insérer le fil conducteur 51 dans une préforme de fibres 41 tissées. Avantageusement, le fil conducteur 51 est présent dans une zone Z1 de matériau tissé dans laquelle la présence ou la formation d'une fissure doit être surveillée. Le fil conducteur 51 est tissé et intégré en suivant un parcours spécifique à l'aide de la machine à tisser, notamment pour couvrir une grande partie de la zone Z1 dans laquelle la présence d'une fissure doit être surveillée. La figure 10 par exemple montre le cheminement d'un fil conducteur 51 qui est entremêlé avec les fibres du corps 40. Le fil conducteur 51 est intégré dans le volume du corps, c'est-à-dire que le chemin du fil, avec les boucles précitées, permet de couvrir l'étendue en surface et d'épaisseur de la zone Z1 à surveiller.

Comme illustré sur la figure 9b, le procédé comprend une étape de jonction b) consistant à apposer l'élément de liaison 60 sur la préforme ou à intégrer l'élément de liaison 60 dans la préforme et à relier des extrémités du fil conducteur 51 à l'élément de liaison 60, de façon à ce qu'il puisse mesurer la résistance du fil conducteur 51 et le comparer au seuil prédéterminé, comme évoqué dans ce qui précède.

Si la valeur de la résistance du fil conducteur 51 est supérieure au seuil prédéterminé, notamment supérieur à une valeur comprise entre 1,01 x R et 1,10 x R, notamment compris entre 1,02 x R et 1,08 x R, en particulier égal 1,05 x R, où R étant la résistance initiale du fil conducteur 51, alors l'élément de liaison 60 est apte à transmettre le signal S au dispositif de lecture 6 signifiant que la pièce 10 est endommagée, notamment par fissuration.

Le procédé comprend également une étape d'injection c), représentée sur la figure 2, consistant à injecter la résine, notamment de la résine organique ou polymérique, dans la préforme préalablement disposée dans un moule (non représenté), de façon à réaliser le corps 40 de la pièce 10, telle que l'aube 1. Ainsi l'ensemble composé de la préforme, du capteur de fissuration 50 et de l'élément de liaison 60, est solidifié.

Il est cependant nécessaire que le capteur de fissuration 50, l'élément de liaison 60, ainsi que les éléments réalisant la connexion puissent supporter les contraintes de température et de pression générées au moment de l'injection, notamment une température comprise entre 180°C et 200°C, notamment une température typique de 180ºC et une pression de 20 bars.

L'étape d'injection c) du procédé peut être, par exemple, précédée d'une étape d'isolation électrique (non représentée) des liaisons entre l'élément de liaison 60 et le fil conducteur 51.

L'invention a été décrite avec des modes de réalisation dans lesquels la pièce 10 est spécifiquement une aube 1 mais peut bien sûr s'appliquer à tout type de pièce 10 en matériau composite, notamment des pièces 10 pour une turbomachine d'aéronef.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de l'invention telle que revendiquée et notamment toutes combinaisons des différents modes de fonctionnement décrits précédemment, pouvant être pris séparément ou en association.

## Revendications

1. Pièce (10) en matériau composite, notamment pour une turbomachine (100) d'aéronef, comportant :
- un corps (40) réalisé à base de fibres (41) tissées en trois dimensions et noyées dans une résine, en particulier une résine organique ou polymérique,
- au moins un capteur de fissuration (50) apte à détecter une fissure de la pièce (10), et
- au moins un élément de liaison (60) relié au capteur de fissuration (50) et configuré pour transmettre un signal (S), en particulier à un organe extérieur à la pièce (10), lorsqu'une fissure de la pièce (10) est détectée,
**caractérisée en ce que** :
- le capteur de fissuration (50) comprend au moins un fil conducteur (51) tissé avec les fibres du corps et s'étendant dans une zone (Z1) du corps (40) dans laquelle la présence de la fissure doit être surveillée, et
- l'élément de liaison (60) est relié à des extrémités du fil conducteur (51) et est configuré pour mesurer la résistance du fil conducteur (51) et pour transmettre sans fil le signal (S), lorsque la résistance du fil conducteur (51) mesurée est supérieure à un seuil prédéterminé.

2. Pièce (10) selon l'une des revendications précédentes, dans laquelle les fibres (41) sont en carbone et le fil conducteur (51) est entouré par une gaine isolante, de préférence réalisée dans le même matériau que la résine.

3. Pièce (10) selon l'une des revendications précédentes, dans laquelle le fil conducteur (51) a un diamètre compris entre 0,05mm et 8mm.

4. Pièce (10) selon l'une des revendications précédentes, dans laquelle le fil conducteur (51) forme au moins une boucle en C et/ou en U.

5. Pièce (10) selon l'une des revendications précédentes, dans laquelle le fil conducteur (51) est réalisé dans un matériau choisi parmi le cuivre, l'aluminium, le fer, l'argent, le nickel et leurs alliages, notamment le constantan.

6. Pièce (10) selon l'une des revendications précédentes, dans laquelle le seuil est compris entre 1,01 x R et 1,10 x R, notamment compris entre 1,02 x R et 1,08 x R, en particulier est égal à 1,05 x R, où R étant la résistance initiale du fil conducteur (51).

7. Pièce (10) selon l'une des revendications précédentes, dans laquelle l'élément de liaison (60) comprend une étiquette RFID (62), notamment configurée pour fonctionner à une fréquence comprise entre 860 et 960 MHz.

8. Turbomachine (100) d'aéronef, comportant une pièce (10) selon l'une des revendications précédentes.

9. Turbomachine (100) selon la revendication précédente, dans laquelle la pièce (10) est une aube (1) de soufflante (110) et la turbomachine (100) comprend un carter (5) de soufflante (110) entourant l'aube (1) de soufflante (110) et portant un dispositif de lecture (6).

10. Procédé de fabrication d'une pièce (10) selon l'une des revendications 1 à 7, dans lequel il comprend :
a) une étape d'insertion consistant à insérer le fil conducteur (51) dans une préforme de fibres (41) tissées en trois dimensions, le fil conducteur (51) étant tissé avec les fibres de la préforme et s'étendant dans une zone (Z1) dans laquelle la présence d'une fissure doit être surveillée,
b) une étape de jonction consistant à apposer l'élément de liaison (60) sur la préforme ou intégrer l'élément de liaison (60) dans la préforme ou à intégrer l'élément de liaison (60) dans la préforme et à relier des extrémités du fil conducteur (51) à l'élément de liaison (60) de façon à ce qu'il puisse mesurer la résistance du fil conducteur (51), et
c) une étape d'injection consistant à injecter la résine, notamment de la résine organique ou polymérique, dans la préforme préalablement disposée dans un moule, de façon à réaliser le corps (40) de la pièce (10) et à solidifier l'ensemble.

11. Procédé de fabrication selon la revendication précédente, dans lequel l'étape d'injection c) est précédée d'une étape d'isolation électrique des liaisons entre l'élément de liaison (60) et le fil conducteur (51).

## Patentansprüche

1. Werkstück (10) aus Verbundmaterial, insbesondere für ein Turbotriebwerk (100) eines Luftfahrzeugs, beinhaltend:
- einen aus in drei Dimensionen gewebten und in einem Harz, besonders einem organischen oder polymeren Harz, getränkten Fasern (41) hergestellten Körper(40),
- mindestens einen Rissbildungssensor (50), der geeignet ist, einen Riss in dem Werkstück (10) zu detektieren, und
- mindestens ein Verbindungselement (60), das mit dem Rissbildungssensor (50) verbunden und konfiguriert ist, um ein Signal (S), besonders an ein Bauteil außerhalb des Werkstücks (10), zu übertragen, wenn ein Riss in dem Werkstück (10) detektiert wird,
**dadurch gekennzeichnet, dass**:
- der Rissbildungssensor (50) mindestens einen mit den Fasern des Körpers gewebten und sich in einer Zone (Z1) des Körpers (40), in der das Vorhandensein des Risses überwacht werden muss, erstreckenden Leiterdraht (51) umfasst, und
- das Verbindungselement (60) mit den Enden des Leiterdrahts (51) verbunden ist und konfiguriert ist, um den Widerstand des Leiterdrahts (51) zu messen und um das Signal (S) drahtlos zu übertragen, wenn der gemessene Widerstand des Leiterdrahts (51) größer als ein vorbestimmter Schwellenwert ist.

2. Werkstück (10) nach einem der vorstehenden Ansprüche, wobei die Fasern (41) aus Kohlenstoff sind und der Leiterdraht (51) von einem Isoliermantel, der vorzugsweise aus dem gleichen Material wie das Harz hergestellt ist, umgeben ist.

3. Werkstück (10) nach einem der vorstehenden Ansprüche, wobei der Leiterdraht (51) einen Durchmesser zwischen 0,05 mm und 8 mm aufweist.

4. Werkstück (10) nach einem der vorstehenden Ansprüche, wobei der Leiterdraht (51) mindestens eine C- und/oder U-Schlaufe bildet.

5. Werkstück (10) nach einem der vorstehenden Ansprüche, wobei der Leiterdraht (51) aus einem Material hergestellt ist, ausgewählt aus Kupfer, Aluminium, Eisen, Silber, Nickel und deren Legierungen, insbesondere Konstantan.

6. Werkstück (10) nach einem der vorstehenden Ansprüche, wobei der Schwellenwert zwischen 1,01 x R und 1,10 x R, insbesondere zwischen 1,02 x R und 1,08 x R liegt, besonders gleich 1,05 x R ist, wobei R der anfängliche Widerstand des Leiterdrahts (51) ist.

7. Werkstück (10) nach einem der vorstehenden Ansprüche, wobei das Verbindungselement (60) einen RFID-Transponder (62) umfasst, der insbesondere konfiguriert ist, um bei einer Frequenz zwischen 860 und 960 MHz zu arbeiten.

8. Turbotriebwerk (100) eines Luftfahrzeugs, beinhaltend ein Werkstück (10) nach einem der vorstehenden Ansprüche.

9. Turbotriebwerk (100) nach dem vorstehenden Anspruch, wobei das Werkstück (10) eine Schaufel (1) eines Gebläses (110) ist und das Turbotriebwerk (100) ein Gehäuse (5) des Gebläses (110) umfasst, das die Schaufel (1) des Gebläses (110) umgibt und eine Lesevorrichtung (6) trägt.

10. Verfahren zur Fertigung eines Werkstücks (10) nach einem der Ansprüche 1 bis 7, das Folgendes umfasst:
a) einen Einfügungsschritt zum Einfügen des Leiterdrahts (51) in eine Vorform von in drei Dimensionen gewebten Fasern (41), wobei der Leiterdraht (51) mit den Fasern der Vorform gewebt wird und sich in einer Zone (Z1) erstreckt, in der das Vorhandensein eines Risses überwacht werden muss,
b) einen Zusammenführungsschritt, bestehend aus dem Anbringen des Verbindungselements (60) an die Vorform oder dem Integrieren des Verbindungselements (60) in die Vorform oder dem Integrieren des Verbindungselements (60) in die Vorform und aus dem Verbinden der Enden des Leiterdrahts (51) mit dem Verbindungselement (60) derart, dass es den Widerstand des Leiterdrahts (51) messen kann, und
c) einen Einspritzschritt, bestehend aus dem Einspritzen des Harzes, insbesondere des organischen oder polymeren Harzes, in die Vorform, die zuvor in einer Gießform angeordnet wurde, derart, um den Körper (40) des Werkstücks (10) herzustellen, und dem Verfestigen der Gesamtheit.

11. Verfahren zur Fertigung nach dem vorstehenden Anspruch, wobei dem Einspritzschritt c) ein Schritt der elektrischen Isolierung der Verbindungen zwischen dem Verbindungselement (60) und dem Leiterdraht (51) vorausgeht.

## Claims

1. A part (10) made of composite material, in particular for an aircraft turbine engine (100), comprising:
- a body (40) made of fibres (41) woven in three-dimensions and immersed in a resin, in particular an organic or polymer resin,
- at least one crack sensor (50) capable of detecting a crack in the part (10), and
- at least one link element (60) connected to the crack sensor (50) and configured to transmit a signal (S), in particular to a member outside of the part (10), when a crack in the part (10) is detected,
**characterised in that**:
- the crack sensor (50) comprises at least one conductive wire (51) woven with the fibres of the body and extending into an area (Z1) of the body (40) in which the presence of the crack is to be monitored, and
- the link element (60) is connected to ends of the conductive wire (51) and is configured to measure the resistance of the conductive wire (51) and to wirelessly transmit the signal (S), when the measured resistance of the conductive wire (51) is above a predetermined threshold.

2. The part (10) according to one of the preceding claims, wherein the fibres (41) are made of carbon and the conductive wire (51) is surrounded by an insulating sheath, preferably made of the same material as the resin.

3. The part (10) according to any of the preceding claims, wherein the conductive wire (51) has a diameter between 0.05mm and 8mm.

4. The part (10) according to any of the preceding claims, wherein the conductive wire (51) forms at least one C- and/or U-shaped loop.

5. The part (10) according to one of the preceding claims, wherein the conductive wire (51) is made of a material selected from copper, aluminium, iron, silver, nickel and their alloys, in particular constantan.

6. The part (10) according to one of the preceding claims, wherein the threshold is between 1.01 x R and 1.10 x R, in particular between 1.02 x R and 1.08 x R, in particular is equal to 1.05 x R, where R is the initial resistance of the conductive wire (51).

7. The part (10) according to any of the preceding claims, wherein the link element (60) comprises an RFID tag (62), in particular configured to operate at a frequency between 860 and 960 MHz.

8. An aircraft turbine engine (100), comprising a part (10) according to one of the preceding claims.

9. The turbine engine (100) according to the preceding claim, wherein the part (10) is a vane (1) of a fan (110) and the turbine engine (100) comprises a casing (5) of the fan (110) surrounding the vane (1) of the fan (110) and carrying a reading device (6).

10. A method for manufacturing a part (10) according to any of claims 1 to 7, wherein it comprises:
a) an insertion step consisting in inserting the conductive wire (51) into a preform of three-dimensionally woven fibres (41), the conductive wire (51) being woven with the fibres of the preform and extending into an area (Z1) in which the presence of a crack is to be monitored,
b) a joining step consisting in affixing the link element (60) to the preform or integrating the link element (60) into the preform or integrating the link element (60) into the preform and connecting ends of the conductive wire (51) to the link element (60) so that it can measure the resistance of the conductive wire (51), and
c) an injection step consisting in injecting the resin, in particular the organic or polymer resin, into the preform previously placed in a mould, so as to produce the body (40) of the part (10) and to solidify the assembly.

11. The manufacturing method according to the preceding claim, wherein the injection step c) is preceded by a step of electrically insulating the links between the link element (60) and the conductive wire (51).
